# EUROPÄISCHE PATENTANMELDUNG

(11) **EP 2 799 901 A2**
(43) Veröffentlichungstag der Anmeldung: **05.11.2014**
(21) Anmeldenummer: 14001435.8
(22) Anmeldetag: 22.04.2014
(51) Int. Cl.: G01S 13/26, G01S 13/58, G01S 13/72, G01S 13/87, G01S 13/91, G01S 13/92, G08G 1/015, G08G 1/017, G08G 1/054, G08G 1/056, G01S 13/86

(54) **Verkehrsüberwachungssystem zur Geschwindigkeitsmessung und Zuordnung von bewegten Fahrzeugen bei einem Mehrziel-Aufnahmemodul**

(30) Priorität: 30.04.2013 DE 102013104443
(71) Anmelder: JENOPTIK Robot GmbH, 40789 Monheim am Rhein (DE)
(72) Erfinder: Lehning, Michael, 31137 Hildesheim (DE); Pröfrock, Dima, 31141 Hildesheim (DE)
(74) Vertreter: Waldauf, Alexander

(57) **Zusammenfassung**

Die Erfindung betrifft ein Verkehrsüberwachungssystem zur Geschwindigkeitsmessung und Zuordnung von bewegten Fahrzeugen bei einem Mehrziel-Aufnahmemodul.

Die Aufgabe, eine neue Möglichkeit zur genaueren Geschwindigkeitsmessung und zuverlässigen Zuordnung von Fahrzeugen (3) zu finden, bei dem die Zuordnungsprobleme von Geschwindigkeiten zu Fahrzeugen (3) in größerer Entfernung und damit verbundene Messunsicherheiten verringert sind, wird erfindungsgemäß gelöst, indem zu einem ersten azimutal messenden Tracking-Radarsensor (11) mindestens ein weiterer Tracking-Radarsensor (12; 13; 14), der eine gleichartige, aber auf einer verschiedenen Frequenz betriebenen Antennenstruktur aufweist, um einen definierten Winkel (ϕ) gegenüber der Antennenstruktur des ersten Tracking-Radarsensors (11) verdreht angeordnet ist, sodass der weitere Tracking-Radarsensor (12; 13; 14) eine Antennenstruktur zur Erfassung wenigstens einer Signalkomponente für die Rekonstruktion von vertikalen Entfernungen, Ausdehnungen und Elevationswinkelpositionen der bewegten Fahrzeuge (3) ausbildet und als Messdaten an seinem Sensorausgang bereitstellt, und Mittel zum Fusionieren der von dem ersten und dem mindestens einen weiteren Tracking-Radarsensor (11; 12; 13; 14) erzeugten Messdaten zu 3D-Radarbilddaten vorhanden sind, wobei ein Trackingverfahren anhand einer Folge der fusionierten 3D-Radarbilddaten vorgesehen ist.

## Beschreibung

Die Erfindung betrifft ein Verkehrsüberwachungssystem zur Geschwindigkeitsmessung und Zuordnung von bewegten Fahrzeugen bei einem Mehrziel-Aufnahmemodul, insbesondere zur Ahndung von Geschwindigkeitsüberschreitungen und anderen Verkehrsverstößen, wie z.B. Rotlichtverstöße.

Aus dem Stand der Technik ist bekannt, die Geschwindigkeit von bewegten Objekten sowie deren zweidimensionale Position auf unterschiedlichen Fahrbahnstreifen der Fahrbahn durch Tracking von entlang der Fahrbahnrichtung sequenziell aufgenommenen Verkehrsszenen, deren Abbild mit verschiedensten Sensoren erzeugt sein kann, wie z.B. Kamerasysteme, Laserscannersysteme oder Tracking-Radarsysteme, zu erfassen.

Wegen ihrer besonders hohen Winkelauflösung und des verhältnismäßig großen Objektfeldes werden Tracking-Radarsensoren mit einer Sende- und zwei Empfangsantennen häufiger als die anderen Verfahren eingesetzt. Dabei wird vorzugsweise ein FSK- (Frequency Shift Keying) moduliertes Signal von der Umgebung reflektiert und die Reflexionen von den zwei Empfangsantennen aufgenommen. Durch die Bewegung des Objektes erfolgt eine messbare Frequenzverschiebung zwischen Sende- und Empfangssignal (Dopplereffekt), aus der sich direkt die Objektgeschwindigkeit ableiten lässt. Aus der Phasenlage verschiedener FSK-Frequenzen lässt sich die Entfernung des Objekts zu den Antennen berechnen. Infolge des räumlichen Versatzes der beiden Empfangsantennen ergibt sich zwischen den gleichen FSK-Frequenzen ein Phasenversatz, aus dem sich der Winkel des Objekts in der Ebene, die sich aus Antennennormale und Translationsvektor der Empfangsantennen ergibt, bestimmen lässt (Stereoeffekt). Die Position eines Objekts kann somit in Polarkoordinaten überführt werden.

Es ist aber immer wieder problematisch, aus einem Pulk von Fahrzeugen die gemessenen Geschwindigkeiten dem jeweiligen Fahrzeug unzweifelhaft zuzuordnen, damit bei der Ahndung von Verkehrsverstößen der Sachverhalt nicht angefochten werden kann.

So ist aus der US 8 294 595 B1 ein Verfahren zum Nachweis bewegter Fahrzeuge bekannt, bei dem eine Vermessung danach vorgenommen wird, ob eine Anzahl von Fahrzeugen in einer Videodatensequenz von einem Kamerasystem vorhanden ist, in Abhängigkeit von der Anzahl der Fahrzeuge eine Zahl von Geschwindigkeitsmessungen von einem Radarsystem vorgenommen und eine Entscheidung darüber getroffen wird, ob eine Geschwindigkeit eines Fahrzeug-Pulks der Anzahl von Fahrzeugen eine Schwelle überschreitet, woraufhin bei Feststellung der Geschwindigkeitsüberschreitung darüber ein Bericht ausgegeben wird. Dabei besteht aber eine Nachweisunsicherheit, welchem Fahrzeug des Fahrzeug-Pulks die Geschwindigkeitsüberschreitung nachweislich zuzuordnen ist.

Im Stand der Technik sind aber bereits zahlreiche Verfahren bekannt, wie man gerade im Bereich mehrspuriger Fahrbahnen zu eindeutigen Fahrzeugzuordnungen kommt. Als Beispiel sei hier die EP 1 990 655 A1 genannt, bei der über die gemessene Entfernung und deren Verknüpfung mit dem zugehörigen Messwinkel der vom Fahrzeug benutzte Fahrbahnstreifen ermittelt und damit das Fahrzeug zweifelsfrei identifiziert wird. Nach dem gleichen Grundprinzip der Positionsbestimmung des Fahrzeugs wird auch in der EP 2 048 515 A1 gearbeitet, wobei dort zur Ermittlung von Rotlichtverstößen aus der gemessenen Geschwindigkeit und dem Abstand des Fahrzeugs die Wahrscheinlichkeit des Überfahren der Haltelinie bei Rot prognostiziert wird, um bei einem Verstoß Beweisfotos in definierten Abständen zur Halterlinie auszulösen. Nachteilig an diesen Zuordnungsmethoden ist der hohe Rechenaufwand, der für das Auffinden des Fahrzeugs an einer definierten Position mit einer bestimmten Geschwindigkeit und die für das Verfolgen (Tracking) durchgeführte Modellrechnung für jedes Fahrzeug erforderlich ist.

Ferner ist ein Kraftfahrzeug-Radarsystem aus der EP 1 922 562 B1 bekannt, bei dem zum Erkennen oder Ausschließen von Fahrbahnhindernissen oder Fahrbahnbegrenzungen zwei Antennenstrukturen mit in zueinander orthogonalen Raumrichtungen unterschiedlicher Richtcharakteristik in einem Abstand zueinander angeordnet sind, wobei sich die Antennenstrukturen in einer dritten Raumrichtung unterscheiden, wodurch azimutale Winkelposition und/oder horizontale Ausdehnung eines Objekts aus der Phasendifferenz der Signale sowie Elevation und/oder vertikale Ausdehnung eines Objekts aus der Amplitude der Signale ermittelt werden. Hierbei werden die unterschiedlichen Richtcharakteristiken der zwei horizontal beabstandeten Radarempfangsantennen durch entgegengesetzte vertikale Abweichung der Radarachsen von der Hauptrichtung aufgenommen und die Amplituden von in den verschieden ausgerichteten Radarkeulen erfassten Objekten ausgewertet. Eine dadurch nachteilig verringerte Auflösung des Azimutwinkels, die nur im Überdeckungsbereich der Radarkeulen möglich ist, sowie ein zwangsläufig erhöhtes Messrauschen der azimutalen Winkelmessung sind nur deshalb tolerierbar, da hier eine exakte Geschwindigkeitsmessung gegenüber stehenden Hindernissen und bewegten Objekten nicht benötigt wird.

Zur Verbesserung der Zuverlässigkeit und/oder der Genauigkeit der Auswertung von Tracking-Radar-Daten oder Videodaten bei der Messung von Geschwindigkeiten, Entfernungen und Abmessungen von Fahrzeugen und deren eindeutiger Zuordnung wird auch eine Kombination beider Aufnahmesysteme durch Datenkorrelation im Sinne einer Transformation der Radardaten in die Videodaten unternommen, wie sie beispielsweise aus der DE 10 2010 012 811°A1 oder auch aus der EP 2 284 568 A2 bekannt ist. Obwohl die Kombination zur Vereinfachung der Zuordnung von Radardaten zu bestimmten Fahrzeugen führt, bleibt die Genauigkeit der Radardaten wegen der mangelnden Auflösung des Azimutwinkels bei größeren Entfernungen unzureichend und im Nahbereich aufgrund verschiedener Trackingpunkte bei unterschiedlichen Fahrzeugklassen sowie wegen bekannter Effekte (wie Knickstrahl, Kosinuseffekt etc.) fehlerhaft.

Der Erfindung liegt die Aufgabe zugrunde, eine neue Möglichkeit zur genaueren Geschwindigkeitsmessung und zuverlässigen Zuordnung von Fahrzeugen bei einem Mehrziel-Aufnahmemodul zu finden, bei dem die Zuordnungsprobleme von Geschwindigkeitsmessdaten zu Fahrzeugen in größerer Entfernung und damit verbundene Messunsicherheiten verringert werden. Eine erweiterte Aufgabe der Erfindung liegt in der Erhöhung der Zuverlässigkeit der Geschwindigkeits- und Positionsdaten zu verifizierten Fahrzeugklassen sowie die Verringerung des Datenverarbeitungsaufwandes beim Fahrzeugtracking.

Die Aufgabe wird bei einem Verkehrsüberwachungssystem zur Geschwindigkeitsmessung und zuverlässigen Zuordnung von bewegten Fahrzeugen mit einem Mehrziel-Aufnahmemodul, enthaltend einen ersten Tracking-Radarsensor mit einer Sendeantenne und zwei räumlich separierten Empfangsantennen, die eine erste Antennenstruktur zur Erfassung von horizontalen Entfernungen, Ausdehnungen und azimutalen Winkelpositionen der bewegten Fahrzeuge bilden und einen Sensorausgang mit einer regelmäßigen Folge von Messdaten, die mindestens eine zum Sensor gerichtete radiale Geschwindigkeitskomponente aus Azimutwinkelpositionen und Entfernungen enthalten, aufweisen, dadurch gelöst, dass mindestens ein weiterer Tracking-Radarsensor, der eine zur Antennenstruktur der Sende- und Empfangsantennen des ersten Tracking-Radarsensors gleichartige, aber auf einer davon verschiedenen Frequenz betriebenen Antennenstruktur aufweist, in unmittelbarer Nähe des ersten Tracking-Radarsensor angeordnet ist, dass die Antennenstruktur des mindestens einen weiteren Tracking-Radarsensors um einen definierten Winkel gegenüber der Antennenstruktur des ersten Tracking-Radarsensors verdreht ist, sodass der weitere Tracking-Radarsensor eine Antennenstruktur zur Erfassung wenigstens einer Signalkomponente für die Rekonstruktion von vertikalen Entfernungen, Ausdehnungen und Elevationswinkelpositionen der bewegten Fahrzeuge ausbildet und einen Sensorausgang mit einer regelmäßigen Folge von Messdaten, die mindestens eine zum Radarsensor gerichtete radiale Geschwindigkeitskomponente aus Elevationswinkelpositionen enthalten, aufweist, und dass Mittel zum Fusionieren der von dem ersten und dem mindestens einen weiteren Tracking-Radarsensor erzeugten Messdaten zu dreidimensionalen (3D-)Radarbilddaten vorhanden sind, wobei auf jedes der übereinstimmend aus den Messdaten des ersten und des mindestens einen weiteren Tracking-Radarsensors erkannten Fahrzeuge ein Trackingverfahren anhand einer Folge der fusionierten 3D-Radarbilddaten vorgesehen ist.

In einer ersten vorteilhaften Variante sind die Antennenstrukturen des ersten Tracking-Radarsensors und des mindestens einen weiteren Tracking-Radarsensor um ganzzahlige Vielfache (n = 1...3) von 45° zueinander verdreht angeordnet, wodurch die mindestens eine erfasste Signalkomponente zur Rekonstruktion von vertikalen Entfernungen, Ausdehnungen und Elevationswinkelpositionen der bewegten Fahrzeuge einen Rekonstruktionsfehler einer vertikalen zu einer horizonalen Fahrzeugposition von 1:1 aufweist.

In einer zweiten vorteilhaften Variante werden die Antennenstrukturen des ersten Tracking-Radarsensors und des mindestens einen weiteren Tracking-Radarsensor um ganzzahlige Vielfache (n = 1...5) von 30° zueinander verdreht angeordnet, wodurch die mindestens eine erfasste Signalkomponente zur Rekonstruktion von vertikalen Entfernungen, Ausdehnungen und Elevationswinkelpositionen der bewegten Fahrzeuge einen Rekonstruktionsfehler einer vertikalen zu einer horizonalen Fahrzeugposition von 1,55:1 aufweist.

Eine besonders bevorzugte Ausführung der Erfindung ergibt sich, wenn die Antennenstrukturen des ersten Tracking-Radarsensors und des einen weiteren Tracking-Radarsensors um 90° zueinander verdreht angeordnet sind, wodurch die erfasste Signalkomponente direkt zur Messung von vertikalen Entfernungen, Ausdehnungen und Elevationswinkelpositionen der bewegten Fahrzeuge anwendbar ist.

Besondere Vorteile ergeben sich, wenn der erste und der mindestens eine weitere Tracking-Radarsensor mit einer Videokamera kombiniert sind, wobei Mittel zur Fusion der horizontalen und vertikalen Messdaten der Tracking-Radarsensoren mit Videodaten der Videokameraeinheit vorgesehen sind. Diese kann im einfachsten Fall eine einzelne Videokamera sein. Zweckmäßig sind jedoch der erste und der mindestens eine weitere Tracking-Radarsensor mit einer Stereo-Videokameraeinheit aus zwei Videokameras mit einem Basisabstand (b) kombiniert, wobei Mittel zur Fusion der horizontalen und vertikalen Messdaten der Tracking-Radarsensoren mit Videodaten der beiden Videokameras vorgesehen sind.

Bei der Verwendung der Kombination aus Tracking-Radarsensoreinheit und Videokamera erweist es sich ferner als vorteilhaft, dass jedem der übereinstimmend aus den Messdaten des ersten und des mindestens einen weiteren Tracking-Radarsensors erkannten Fahrzeuge ein ROI-Fenster zur Ermittlung von Fahrzeugmerkmalen und zum Tracking innerhalb eines Videobildes zugeordnet ist. Dabei ist zweckmäßig der Basisabstand der zwei Videokameras horizontal angeordnet. Es gibt aber Fälle, in denen - ohne jegliche Nachteile für die Datenverarbeitung - der Basisabstand (b) der zwei Videokameras bevorzugt vertikal angeordnet ist.

Bei einer bevorzugten Ausführungsform einer Kombination aus Tracking-Radarsensoreinheit und Stereo-Videokameraeinheit sind der erste und der mindestens eine weitere Tracking-Radarsensor innerhalb des Basisabstandes (b) der zwei Videokameras angeordnet, wobei die Tracking-Radarsensoren entlang einer gemeinsamen Achse des Basisabstandes (b) zwischen den zwei Videokameras angeordnet sind.

In einer weiteren vorteilhaften Ausführung kann der erste und der mindestens eine weitere Tracking-Radarsensor innerhalb des Basisabstandes (b) der zwei Videokameras angeordnet sein, wobei die Tracking-Radarsensoren orthogonal zu einer gemeinsamen Achse des Basisabstandes (b) zwischen den zwei Videokameras angeordnet sind.

Es kann aber - insbesondere für eine dauerhaft installierte Kombination aus Tracking-Radarsensoreinheit und Stereo-Videokameraeinheit - auch zweckmäßig sein, dass der erste und der mindestens eine weitere Tracking-Radarsensor außerhalb des Basisabstandes (b) der zwei Videokameras angeordnet sind. Dabei können der erste und der mindestens eine weitere Tracking-Radarsensor räumlich getrennt von der Stereokameraeinheit angeordnet sein, wobei nach deren räumlich getrennten Aufstellung eine Kalibrierung zur Ermittlung einer Transformationsvorschrift vorzusehen ist.

Die Erfindung basiert auf der Grundüberlegung, dass herkömmliche Tracking-Radarsensoren lediglich in einer Koordinate (Azimut) eine hochauflösende Winkelmessung erreichen. Das ist besonders von Nachteil, wenn die Radarmessung für große Entfernungen von einem erhöhten Punkt (z.B. einer Brücke) herannahende Fahrzeuge angemessen werden, wobei dann auch noch die unterschiedliche Höhe der Fahrzeuge als zusätzliche Fehlerquelle eingeht. Gemäß der Erfindung wird dieses Problem gelöst, indem ein üblicher Tracking-Radarsensor der in der Azimutrichtung eine Sendeantenne und zwei räumlich separierte Empfangsantennen aufweist und somit nur in dieser Koordinate genau misst, durch einen weiteren gleichartigen Radarsensor, der jedoch um einen Winkel gedreht angeordnet ist, zur Winkelauflösung in der Höhenkoordinate (Elevation) vorgesehen ist.

Besonders vorteilhaft kann dieses Radarsensorsystem noch mit einer oder mehreren Videokameras kombiniert werden, um den Bildbeweis eines Verkehrverstoßes besser zu dokumentieren. Für diesen Fall vereinfacht sich vor allem das Auffinden und Verfolgen der Fahrzeuge im Videostream.

Durch die Erfindung wird eine neue Möglichkeit aufgezeigt, die eine genauere Geschwindigkeitsmessung und zuverlässige Zuordnung von Fahrzeugen bei einem Mehrziel-Aufnahmemodul realisiert, bei dem die Zuordnungsprobleme von Geschwindigkeitsmessdaten zu Fahrzeugen in größerer Entfernung und damit verbundene Messunsicherheiten verringert werden. Des Weiteren wird die Zuverlässigkeit der Geschwindigkeits- und Positionsdaten zu verifizierten Fahrzeugklassen erhöht und der Datenverarbeitungsaufwand beim Fahrzeugtracking in einem Videostream kann deutlich verringert werden.

Die Erfindung wird nachfolgend anhand von Ausführungsbeispielen und Abbildungen näher erläutert. Dabei zeigen:
- Fig. 1:: das Prinzip der Erfindung in einer bevorzugten Ausführungsform, wobei a) die Sensorkonfiguration, b) die horizontalen Radarkegel und c) die vertikalen Radarkegel zeigen;
- Fig. 2:: eine Darstellung der Problemfälle eines Tracking-Radars bei der Entfernungs- und Geschwindigkeitsmessung; wobei das vertikale Auflösungsproblem in Gegenüberstellung von a) einem LKW und b) einem PKW und c) bei einer Fahrbahn mit einer Gefällestrecke verdeutlicht wird;
- Fig. 3:: eine schematische Darstellung der vertikalen Radarauflösung für unterschiedliche Winkel ϕ der Verdrehung der Radarsensoren für a) ϕ = 90°, b) ϕ = 45°, wobei c) und d) die zugehörigen Triangulationsdarstellungen des Messungen enthalten;
- Fig. 4:: vier unterschiedliche Sensorkonfigurationen mit darüber befindlichen Triangulationsdarstellungen für a) zwei orthogonale Radarsensoren, b) drei Radarsensoren mit jeweils 45°-Verdrehung, c) drei Radarsensoren mit einem 45° verdrehten und zwei gleichgerichteten Sensoren sowie d) mit vier Radarsensoren mit jeweils 30°-Verdrehung zueinander;
- Fig. 5:: eine bevorzugte Ausführung der Erfindung in Verbindung mit einer Stereokamera, wobei a) bis d) unterschiedliche Ausrichtungen der Radarsensoren zur Videokamerabasis und zur aufzunehmenden Verkehrsszene darstellen;
- Fig. 6:: zwei zweckmäßige Ausführungen der Erfindung mit unterschiedlichen räumlichen Anordnungen des Verbundsystems aus Radarsensoren und Videokameras;
- Fig. 7:: eine Darstellung der vorteilhaften Verringerung des Rechenaufwandes bei einem Video-Radar-Verbundsystems;

Grundvoraussetzung für das Verständnis der nachfolgend erläuterten Erfindung ist - aufgrund der Multiziel-Fähigkeit des Verkehrsüberwachungssystems - das sog. Fahrzeug-Tracking.

Tracking bezeichnet die Verfolgung von einem oder mehreren Fahrzeugen innerhalb der beobachteten Szene, so dass Fahrtrichtung, Geschwindigkeit, Position und ggf. weitere Merkmale wie Form, Dimension, Fahrzeugklasse, Farbe und Kfz-Kennzeichen abgelesen werden können.

Das Tracking kann durch einen Sensor alleine erfolgen oder auch durch die Kombination der Werte verschiedener Sensoren. Werden die Werte verschiedener Sensoren, die auch vom gleichen Typ sein können verarbeitet, dann wird in diesem Zusammenhang von Sensorfusion gesprochen.

Das Tracking für ein Straßenverkehrsmesssystem besteht grundsätzlich aus einem gestaffelten Vorgehen. Der Sensor liefert in einer ersten Stufe die Rohdaten. In der Regel werden diese Rohdaten in regelmäßigen Abständen (z.B. 100-mal/Sek.) abgefragt und liefern von ihrem Abbild her ein nicht vollständiges Bild der Straßenszene. Im Folgenden wird als beispielhafter Sensor ein Radarsystem angenommen. Beim Radarsystem werden als nicht vollständige Messparameter in einer ersten Stufe Distanz, Winkel und Geschwindigkeitskomponentenwerte geliefert. Diese Geschwindigkeitswerte beinhalten die radiale Komponente der Geschwindigkeit. Die radiale Komponente der Geschwindigkeit bezieht sich dabei auf die Geschwindigkeitskomponente in Richtung zum Radarsystem.

Diese Rohdaten werden in einer ersten Verarbeitungsstufe (Merkmalsgenerierung) analysiert und ergeben sog. Merkmalsvektoren. Diese Merkmalsvektoren fassen auf einer unteren Ebene die Rohdaten zusammen und beschreiben ein Messereignis, das mit hoher Wahrscheinlichkeit einem Fahrzeug zugeordnet werden kann.

Aufgabe dieser Stufe ist, Hintergrundinformationen auszufiltern und die Rohdaten auf einen geeigneten Satz von Merkmalsvektoren zurückzuführen, die in weiteren Verarbeitungsstufen genutzt werden können.

Im Falle des Trackingradars werden aus der Vielzahl der Messungen nur die Messungen an Rohdaten extrahiert, die bestimmte Gütekriterien (Signalpegel) einhalten, nach außen weitergeleitet. Bei den Gütekriterien wird den unterschiedlichen Merkmalen verschiedenes Vertrauen entgegengebracht. Daran schließt sich das eigentliche Trackingverfahren an, in das die vorbereiteten Merkmalsvektoren einlaufen. Das Trackingverfahren hat eine Reihe von Aufgaben umzusetzen, die wie folgt untergliedert werden können.
1. Initialisierung eines Modells,
2. Verfolgung eines Modells,
3. Verwerfen eines Modells.

Die Stufen Initialisierung und Verwerfen werden auch oft mit Geburt und Tod eines Modells bezeichnet.

Ein Modell im Sinne der Erfindung ist die berechnete Bahnkurve eines Fahrzeugs mit den oben bezeichneten Eigenschaften Geschwindigkeit, Position und Fahrtrichtung aus den ermittelten Merkmalsvektoren.

Grundsätzlich kann das Tracking von außen als Blackbox gesehen werden, in die Merkmalsvektoren einlaufen und Informationen über die Modelle herauslaufen, beginnend mit der Initialisierungsphase werden Merkmalsvektoren über einen längeren Zeitraum beobachtet. Wenn diese Merkmalsvektoren eine konsistente Information beinhalten, z.B. dass sich die Position in regelmäßigen Schritten fortpflanzt, so wird aus dem Tracking heraus ein neues Modell initialisiert. Laufen nun im weiteren Schritt neue Merkmalsvektoren ein, so werden diesen Merkmalsvektoren mit vorhandenen Modellen verglichen. Zu diesem Zweck wird der Abstand des Messvektors zu den Modellparametern verglichen. Ist ein Messvektor in der Nähe eines Modells angesiedelt, so wird das Modell unter Berücksichtigung dieses Messvektors aktualisiert. Dieser Vorgang wird im Rahmen des Tracking als sog. Update-Phase bezeichnet. Konnte dem Modell kein Merkmalsvektor zugeordnet werden, so wird das Modell weiterhin beibehalten. In jedem Fall wird aber ein Statistik geführt, wann einem Modell ein Merkmalsvektor zugeordnet werden konnte und wann nicht.

Nach Abschluss dieser Update-Phase wird das Modell gemäß seinen zugeordneten Fahreigenschaften virtuell auf der Fahrbahn weitergeschoben. Dies bedeutet, dass die neue Position prädiziert wird. Nach der Prädiktion des Modells wird im nächsten Messzyklus wiederum eine Zuordnung der neuen Messvektoren zu den vorhandenen Modellparametern getestet. Dieser Prozess läuft zyklisch ab. Nach jedem Prädiktionsschritt wird geprüft, ob das Modell z.B. vordefinierte Fotolinien (Triggerlinien) überschritten hat. In diesem Fall wird von einem Trackingmodul eine Information nach außen gesendet. Diese Informationen können z.B. genutzt werden, um Fotos auszulösen. Grundsätzlich können im Radarsensor beliebig viele Triggerlinien parametrisiert werden. Allerdings steigt mit zunehmender Anzahl die Datenbelastung der Schnittstelle zwischen Radarsensor und einem daran angeschlossenen Datenverarbeitungssystem.

Die Geburt eines Modells ist eine der schwierigsten Phasen innerhalb des Trackings, da der Raum der aufgesammelten Merkmalsvektoren in der Vergangenheit untersucht werden muss.

Ein ebenfalls wichtiges Verfahren ist das Sterben der Modelle zu veranlassen. Im einfachsten Fall verlässt das Modell den Messraum und kann dann aus der Liste der vorhandenen Modelle gelöscht werden. Die Liste der vorhandenen Modelle ist notwendig, um mehrere Modelle gleichzeitig zu verfolgen (Multi-Target Fähigkeit). Ein schwierigerer Fall ergibt sich dann, wenn sich das Modell grundsätzlich noch im Messraum befindet, aber über einen längeren Zeitraum keine Zuordnung von Merkmalsvektoren vorgenommen werden konnte. In diesem Fall stirbt das Modell auch, da die statistische Unsicherheit als zu groß angesehen werden kann. So ein Vorgang kann z.B. passieren, wenn grundsätzlich das Tracking davon ausgeht, dass Fahrzeuge eine bestimmte Fahrtrichtung einhalten, das angemessene Fahrzeug aber diese Fahrverhalten nicht besitzt, z.B. ein Rechtsabbieger. Eine andere Möglichkeit, dass das Modell im Messbereich stirbt, kann dadurch verursacht werden, dass die Modellinitialisierung unzureichend oder fehlerhaft war.

Die Umsetzung des Trackings kann durch klassische rekursive Schätzfilter realisiert werden (Kalmanfilter). Alternativ können aber auch andere (nicht rekursive) Verfahren eingesetzt werden. Allerdings benötigen nicht rekursive Verfahren mehr Rechenressourcen und sind nicht besonders geeignet für hochdynamische Änderungen von Merkmalen, wie z.B. einer Änderung der Fahrtrichtung.

Der Vorteil moderner Trackingverfahren besteht darin, dass auch mit unvollständigen Messdaten, wie z.B. der Radialgeschwindigkeit eine hochgenaue und gute Positionsschätzung durchgeführt werden kann.

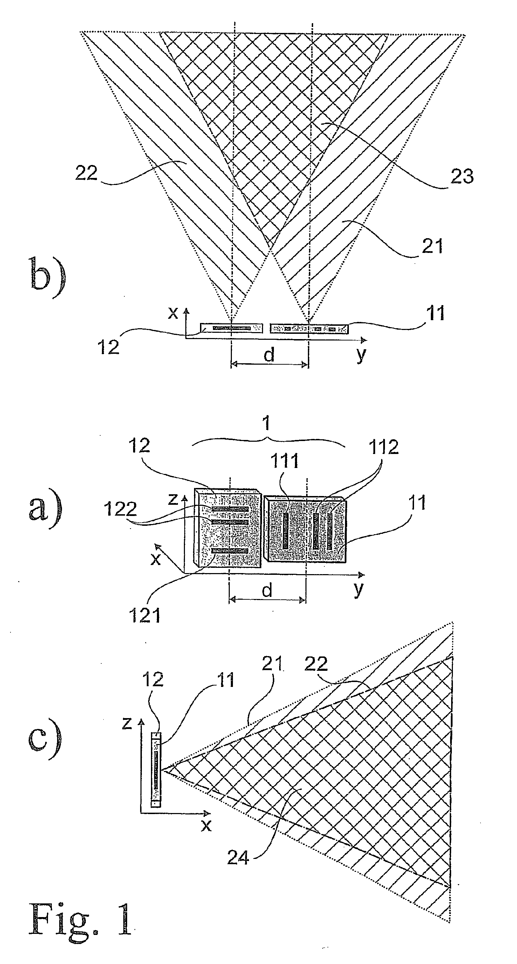

Der grundsätzliche Aufbau eines erfindungsgemäßen Radarsystems - der in Fig. 1 in einer bevorzugten und besonders übersichtlichen Variante in drei Ansichten dargestellt ist - umfasst gemäß Fig. 1a eine Tracking-Radar-Einheit 1, die neben einem herkömmlichen ersten Tracking-Radarsensor 11 mit einer vertikal ausgerichteten Sendeantenne 111 und zwei dazu parallelen und räumlich separierten Empfangsantennen 112 einen weiteren gleichartigen Tracking-Radarsensor 12 aufweist, wobei letzterer gegenüber dem ersten Tracking-Radarsensor 11 verdreht angeordnet ist, sodass seine Sende- und Empfangantennen 121 bzw. 122 nicht vertikal, sondern gedreht-hier horizontal - ausgerichtet sind. Wie weiter unten noch erläutert wird, sind auch Winkel deutlich kleiner als 90° wählbar.

Während der erste Radarsensor 11 aufgrund seiner Antennenstruktur und deren Ausrichtung ausschließlich hochaufgelöste azimutale Winkelmessungen vornehmen kann, nimmt der weitere Radarsensor 12 ausschließlich hochaufgelöste Winkelmessungen der Elevation vor. Dadurch wird die Tracking-Radar-Einheit 1 vom ursprünglichen 2D-Radar (nur Tracking-Radarsensor 11) zu einem 2x2D-Radar (zwei gegeneinander verdrehte Tracking-Radarsensoren 11 und 12), das tatsächlich eine hochgenaue 3D-Auflösung bietet.

Diese 3D-Auflösung wird innerhalb der Überlagerung der Radarkegel 2 nutzbar, wie es Fig. 1b für die Azimutkoordinate und Fig. 1c für die Elevation zeigen. Ist der Abstand d (wenige Zentimeter) klein im Vergleich zum beobachteten Messraum (bis zu einigen hundert Meter), hat der räumliche Versatz der Tracking-Radarsensoren 11 und 12 nahezu keinen Einfluss auf die Überlagerung. Vielmehr wird der Überdeckungsbereich 23 bzw. 24 maßgeblich durch den horizontalen und vertikalen Öffnungswinkel der Radarkegel 21 und 22 definiert. Sind beide Winkel identisch, überdecken sich die Radarkegel 21 und 22 nahezu perfekt. Mit zunehmender Differenz der Öffnungswinkel verringert sich der Überdeckungsbereich. Außerhalb der unterschiedlich großen Überdeckungsbereiche 23 und 24 sind im nicht überlappenden Teil des ersten Radarkegels 21 genaue Azimutwinkel messbar und im entsprechenden Teil des zweiten Radarkegels 22 genaue Elevationswinkelmessungen möglich.

Wie weiter unten noch erläutert wird, können die Radarsensoren 11 und 12 den Abstand d auch in beliebiger Richtung aufweisen (d.h. vertikal übereinander oder auch schräg versetzt angeordnet sein).

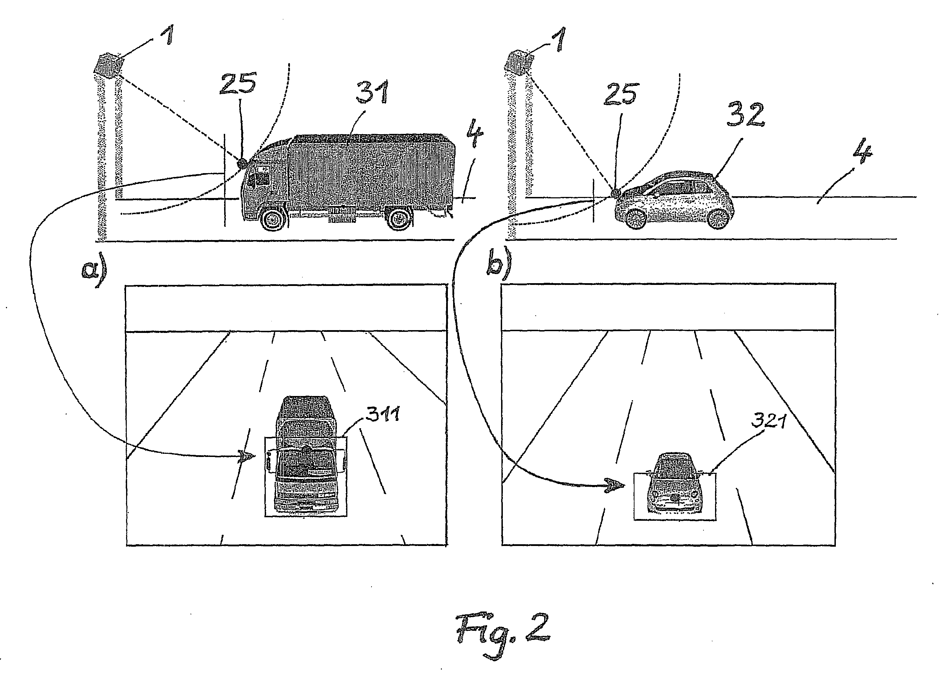

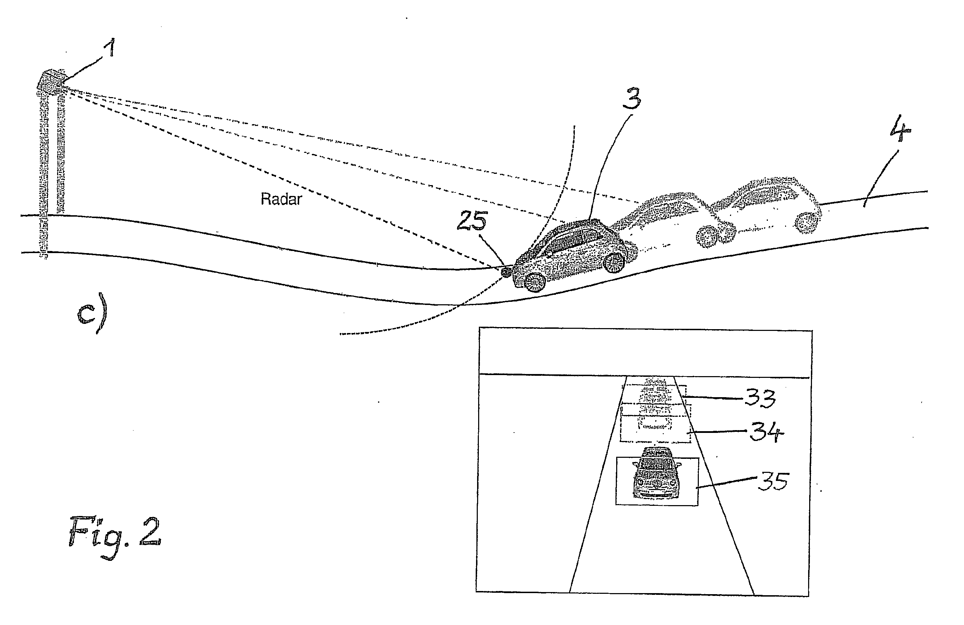

In Fig. 2 sind Problemfälle gezeigt, für den das Trackingradar bei fehlender Winkelauflösung für die Elevation die Entfernung fehlerhaft misst und damit die Geschwindigkeit weniger genau ermittelt werden kann.

In der Darstellung von Fig. 2a ist oben die Radarmesssituation und darunter das daraus erzeugte Frontalabbild von einem LKW 31 gezeigt, wobei der vorderste Radarmesspunkt 25 wegen der Höhe des LKW 31 über der Fahrbahn 4 zu einer kürzeren Entfernungsmessung führt als bei der in Fig. 2b dargestellten gleichen Radarmesssituation bei einem PKW 32. Die unterschiedliche Höhe der Radarmesspunkte 25 wird in den darunter befindlichen Frontabbildern anhand der eingerahmten Frontansichten 311 und 321, die aus dem Gesamtbild häufig für die weitere Bildverarbeitung zur Fahrzeugidentifikation extrahiert werden, besonders deutlich.

Fig. 2c zeigt eine ähnlich fehlerhafte Entfernungsmessung für den Fall, dass sich das Fahrzeug 3 auf einer geneigten Fahrbahn 4 bewegt, wodurch infolge der sich ändernden Höhe der erfassten Fahrzeugpositionen 33, 34 und 35 die Entfernungsmessung beeinträchtigt wird und die Genauigkeit der Geschwindigkeitsmessung sinkt.

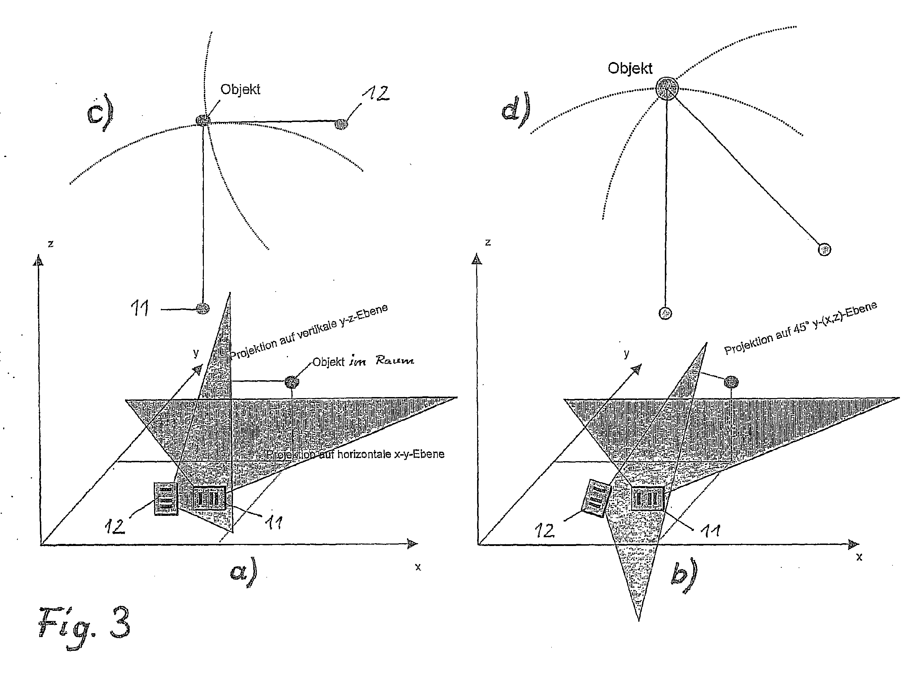

Fig. 3a zeigt für die in Fig. 1 gewählte Konfiguration der Radarsensoren 11 und 12 die prinzipielle Messsituation als Projektion eines Objekts im Raum auf die jeweilige Messebene der Radarsensoren 11 und 12. Die zugehörige Fig. 3c verdeutlicht dieselbe Situation als zweidimensionales Triangulationsschema. Daraus wird ersichtlich, dass jeder der Radarsensoren 11 und 12 genau eine Winkelmessung vollständig erfasst, d.h. die Messung des um 90° verdrehen Radarsensors 12 liefert direkt eine Höhenmessung.

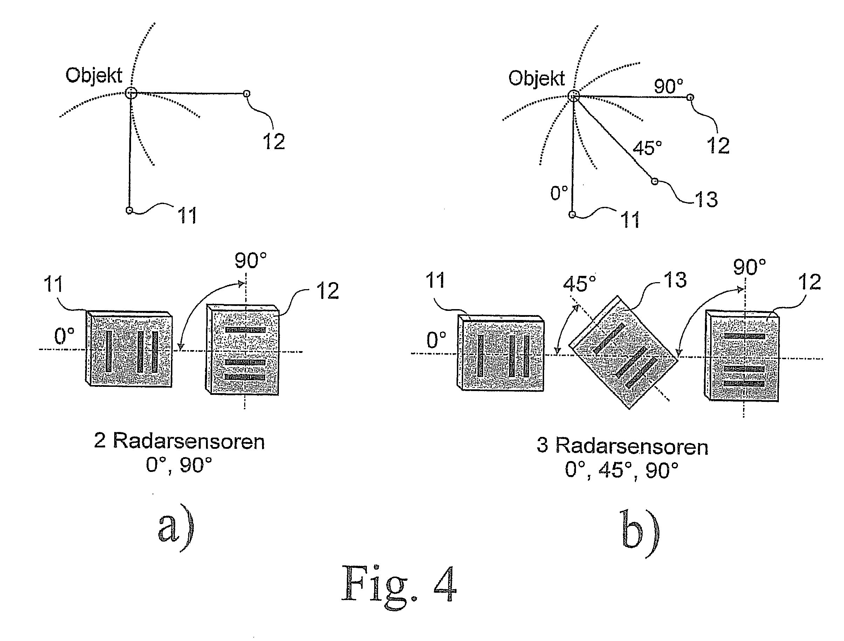

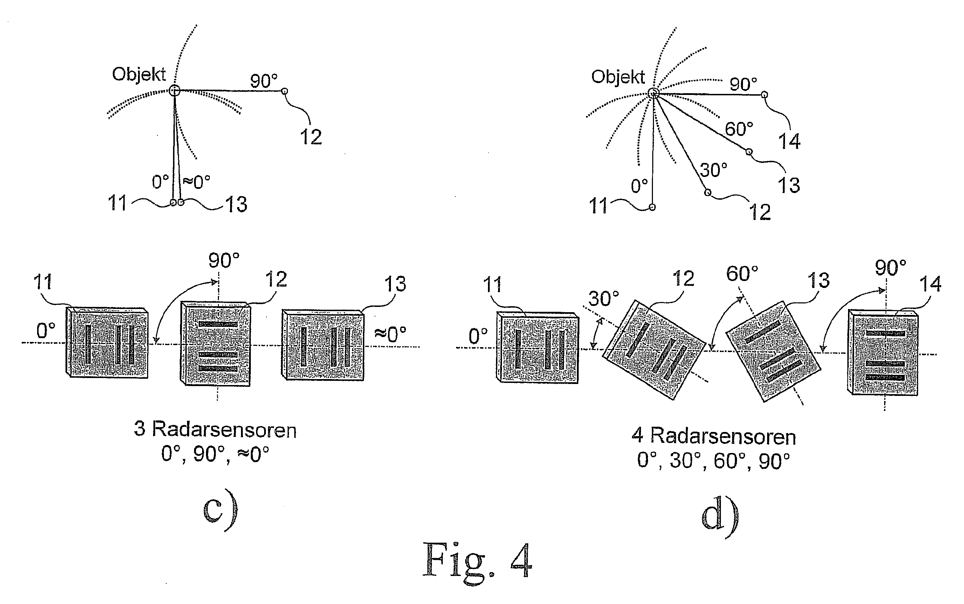

Fig. 3b zeigt nun eine modifizierte Ausrichtung des Radarsensors 12, indem dieser gegenüber dem ersten Radarsensor 11 um 45° verdreht ist. Dabei geht sowohl die horizontale als auch die Höhenmessung in den Messwert des Radarsensors 12 ein. Aus dem Messwert lässt sich die horizontale Position und die Höhe mit Hilfe der Messdaten aus dem ersten Radarsensor 11 rekonstruieren. Dabei liegt das Verhältnis des Rekonstruktionsfehlers der vertikalen zur horizontalen Objektposition bei 1:1 [sin(45°):sin(45°)]. Eventuelle Messfehler des Radarsensors 12 auf die horizontale Messung wirken sich bei der Rekonstruktion deshalb stärker aus als bei Fig. 3a. Verringert man den Winkel ϕ (nur in Fig. 4 eingezeichnet) weiter, z.B. auf 30° oder sogar auf 5°, so steigt das Verhältnis des Rekonstruktionsfehlers der vertikalen zur horizontalen Objektposition des Radarsensors 12 auf ein Verhältnis gemäß [sin(90°-ϕ): sin ϕ)]. Ein Höhenmessfehler wirkt sich dabei also indirekt proportional aus, nämlich mit 1/(sin ϕ). Die in Fig. 3d dazu gezeigte Triangulation verdeutlicht den Verlust an Messsicherheit.

In Fig. 4a-4d sind Modifikationen für die erfindungsgemäße Tracking-Radar-Einheit 1 gezeigt und jeweils darüber ein Triangulationsschema für die jeweilige Sensorkonfiguration angegeben. Lediglich zum Vergleich ist in Fig. 4a nochmals die Ausführung von Fig. 1 gezeigt.

Fig. 4b beschreibt eine Radar-Einheit 1 mit drei Radarsensoren 11, 12 und 13, wobei der weitere Radarsensor 12 wie in Fig. 4a verdreht ist, aber noch ein weiterer Radarsensor 13 mit einem Winkel ϕ = 45° zum ersten Radarsensor 11 verdreht ist. Das Verhältnis des Rekonstruktionsfehlers der vertikalen zur horizontalen Objektposition des weiteren Radarsensors 13 beträgt 1:1. Damit trägt die Messung des Radarsensors 13 zur Senkung des Messrauschens zu der Messung der Radarsensor 11 und 12 bei.

Bei einer Konfiguration, wie sie in Fig. 4c gezeigt ist, liefern zwar beide mit ϕ = 0° ausgerichteten Radarsensoren 11 und 13 nur die 2D-Objektkoordinaten im Azimut, aber insgesamt verringert sich dadurch das Messrauschen der Gesamtmessung.

Fig. 4d gibt ein vorteilhaftes Beispiel für die Tracking-Radar-Einheit 1 an, bei dem außer dem ersten Radarsensor 11 noch drei weitere Radarsensoren 12, 13 und 14 angeordnet sind, die jeweils um ganzzahlige Vielfache von 30° gegenüber dem ersten Radarsensor 11 verdreht angeordnet sind. Durch einen möglichst großen Abstand der Verdrehwinkel ϕ zwischen 0° und 90° leistet jeder einzelne Radarsensor 11 bis 14 einen optimalen Beitrag zur Verringerung der Messunsicherheiten in allen drei Raumdimensionen. Soll dagegen einen bestimmte Dimension in ihrer Messsicherheit bevorzugt werden, so können auch andere Abstände der Verdrehwinkel ϕ gewählt werden. So wird in dem Bespiel aus Fig. 4c die horizontale Auflösung auf Kosten der vertikalen Auflösung bevorzugt.

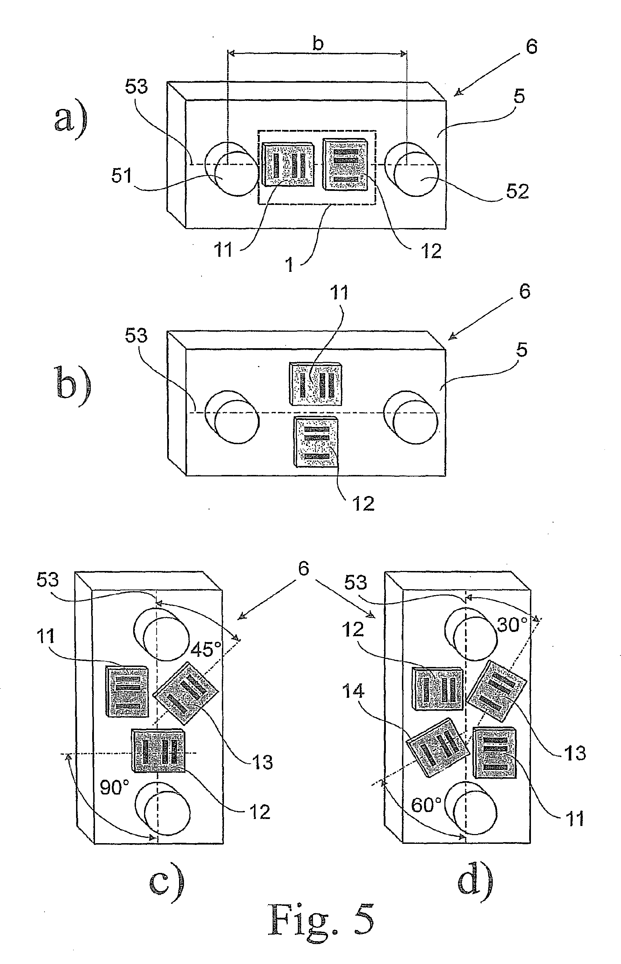

Die Anordnung entlang einer Geraden soll in diesem Beispiel nur die Übersichtlichkeit der systematischen Lageänderung besser verdeutlichen, eine kompakte Anordnung in einem Karree ist aus Gründen der gleichmäßigeren Überdeckungsbereiche 23, 24,... der Radarkegel 2 bevorzugt. Es sei darauf hingewiesen, dass die Nebeneinanderanordnung von mehr als zwei Radarsensoren-wie sie in Fig. 4b-4d aus Gründen der besseren Veranschaulichung des Verdrehmodus gezeigt ist-in der Regel durch eine zweidimensionale Anordnung in der Fläche - wie nachfolgend zu Fig. 5 beschrieben.

Fig. 5 zeigt den vorteilhaften Verbund der erfindungsgemäßen Tracking-Radar-Einheit 1 mit einer Videokameraeinheit 5. Ohne Beschränkung der Allgemeinheit wird im Weiteren von einer bevorzugten Verwendung von zwei Videokameras 51 und 52, die mit einem Basisabstand b in einer Stereokonfiguration angeordnet sind, ausgegangen.

Unterschiedliche Möglichkeiten für die Realisierung eines Video-Radar-Verbundsystems 6 sind in den Fig. 5a-5d dargestellt.

In einer ersten Ausführung weist Fig. 5a zwischen den im Basisabstand b angeordneten Videokameras 51 und 52 zwei um 90° verdrehte Radarsensoren 11 und 12 auf, die vertikal mittig entlang der Basisachse 53 der Videokameras 51 und 52 horizontal eng benachbart im Abstand d (nur in Fig. 1 bezeichnet) angeordnet sind. Auf diese Weise wird nicht nur eine sehr kompakte Anordnung, sondern auch eine fast vollständige Überdeckung der Radarkegel 21 und 22 (nur in Fig. 1 gezeichnet) mit den Stereo-Kamerabildern mit den Gesichtsfeldern (Kamera-FOV - Field of View) erreicht.

Eine völlig ebenbürtige Variante zu Fig. 5a wird mit dem in Fig. 5b dargestellten Video-Radar-Verbundsystem 6 erreicht. Bei dieser Konstellation sind die um 90° gegeneinander verdrehten Radarsensoren 11 und 12 vertikal eng benachbart orthogonal zur Basisachse 53 und mittig zwischen den beiden Videokameras 51 und 52 angeordnet.

In Fig. 5c ist eine weitere Variante des Video-Radar-Verbundsystems 6 dargestellt, das sich darin von den zwei vorgenannten Varianten unterscheidet, dass die Basisachse 53 der Videokameras 51 und 52 vertikal angeordnet ist. Das hat Vorteile für die Anbringung des Verbundsystems 6 an einem schlanken Mast und bringt für die Datenfusion mit dem Tracking-Radarsystem keinerlei Nachteile.

Das Tracking-Radarsystem besteht in dieser Modifikation aus drei Radarsensoren 11, 12 und 13, die analog zu Fig. 4b um jeweils 45° gegeneinander verdreht sind. Dabei sind der erste Radarsensor 11 und gegenüber diesem ein um 90° gedrehter Radarsensor 12 sowie ein um 45° gedrehter Radarsensor 13 in einem gleichseitigen Dreieck angeordnet, dessen Schwerpunkt mittig auf der Basisachse 53 zwischen den beiden Videokameras 51 und 52 liegt. Dieselbe Konfiguration der Radarsensoren 11, 12 und 13 ist selbstverständlich auch auf die horizontale Normallage der Videokameras 51 und 52 anwendbar.

Eine weitere Modifikation der vertikal angeordneten Stereo-Videokameraeinheit 5 ist in Fig. 5d dargestellt mit drei weiteren Radarsensoren 12, 13 und 14, die gegenüber dem ersten Radarsensor 11 jeweils um ein anderes ganzzahliges Vielfaches des Winkels ϕ = 30° (analog zu Fig. 4d) angeordnet sind. Diese vier Radarsensoren 11, 12, 13 und 14 sind in einem Karree zwischen den Kameras 51 und 52 angeordnet, wobei das Karree (jeweils bezüglich der Sensorschwerpunkte) mittig und symmetrisch zur Basisachse 53 der Videokameras 51 und 52 angeordnet sind. Diese Konfiguration, die auch als Raute (auf der Spitze stehendes Quadrat) zwischen den Videokameras 51 und 52 angeordnet sein kann, ist in gleicher Weise ebenfalls für die horizontale Normallage der Videokameras 51 und 52 anwendbar.

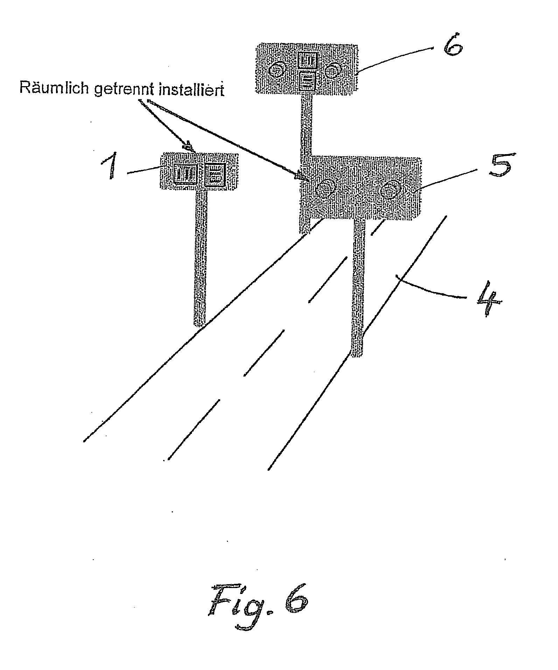

Dass das Video-Radar-Verbundsystem 6 auch noch weiter modifiziert werden kann, ist der Fig. 6 zu entnehmen. Der bisher beschriebene kompakte Aufbau ist in dieser Darstellung im Hintergrund nochmals im Hintergrund dargestellt.

Es ist aber auch möglich, die Tracking-Radar-Einheit 1 räumlich getrennt von der Videokameraeinheit 5, beispielsweise an unterschiedlichen Seiten der Fahrbahn 4 zu installieren. Das ist solange unbedenklich, soweit die Radarkegel 21 und 22 und Kamera-FOV auch für einen interessierenden Nahbereich der Messungen und des Trackings ausreichende Überdeckungsbereiche (in Analogie zu den in Fig. 1 gezeigten Überdeckungsbereichen 23, 24 der Radarsensoren 11, 12) aufweisen. Für die notwendige Fusion der Radardaten mit den Kameradaten wird dabei eine zusätzliche Kalibrierung zur Erstellung einer Transformationsvorschrift erforderlich, die jedoch nur einmalig bei der festen Installation anfällt.

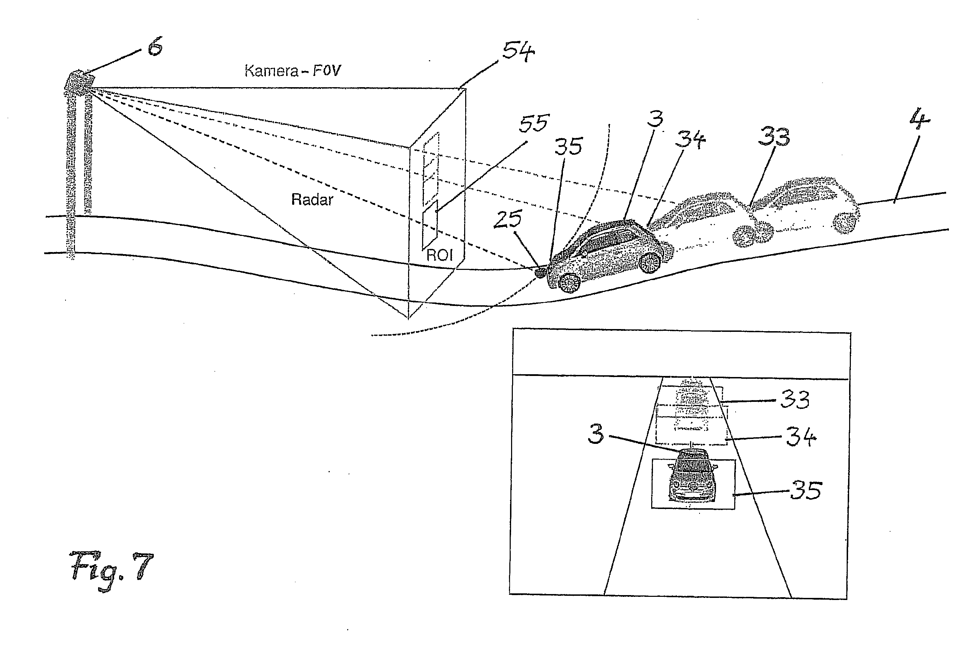

Die besonderen Vorteile des Video-Radar-Verbundsystems in der Ausführung gemäß den Fig. 5a oder 5b soll nachfolgend anhand der Fig. 7 genauer beschrieben werden.

Von Fahrzeugen, die sich dem Messsystem (Tracking-Radarsensor-Einheit 1 und Stereo-Videokameraeinheit 5) nähern werden in ca. 100 m Entfernung von dem Tracking-Radarsensor-Einheit 1 Signale empfangen und bei entsprechender Güte und Stetigkeit des Signalsverlauf wird ein Modell im Trackingalgorithmus geboren. Da der aus mindestens zwei Radarsensoren 11 und 12 bestehende Sensorverbund mehrzielfähige Tracking-Radarsensoren verwendet, können dabei mehrere Objekte gleichzeitig getrackt (verfolgt) werden.

Der Trackingalgorithmus liefert zu jedem Objekt (Fahrzeug 3) die aktuellen Werte und eine Prädiktion, die mit den nachfolgenden, dann aktuellen Werten abgeglichen wird. Die Werte sind: Geschwindigkeit, Richtung, Beschleunigung, Entfernung, Winkel zur Messachse der Radarsensoren 11 und 12 im dreidimensionalen Raum (3D-Raum, sowie Fahrzeughöhe, -breite und -länge.

Die Fahrzeugbreite und -länge wird dabei gemäß einem Verfahren der nicht vorveröffentlichten DE 10 2012 107 445 bestimmt. Die Fahrzeughöhe wird in Analogie zu dem dort beschriebenen Verfahren ermittelt.

Da die Transformationsparameter zwischen der Tracking-Radarsensor-Einheit 1 und der Videokameraeinheit 5 bekannt sind bzw. in einander überführt werden können, kann das a priori Wissen aus den Trackingdaten des Tracking-Radarsensor-Einheit 1 im Fernfeld (100 bis 50 m) dazu genutzt werden, um einen ROI-Raum 55 (Region of Interest) in Form eines 3D-Raumes im Nahfeld (50 bis 10 m), insbesondere einen Quader, über der Fahrbahn 4 (oder einem Fahrbahnstreifen davon) zu bestimmen. Der Videostream der Videokameraeinheit 5 wird dann für jedes getrackte Fahrzeug 3 ausschließlich und begrenzt in dem dafür festgelegten ROI-Raum 55 ausgewertet.

Die Höhe des ROI-Raumes 55 als Quader (der als solcher nicht gezeichnet ist, da sich dieser aus den sequenziell aufgenommenen Bilddaten des Kamera-FOV 54 zusammensetzt) ergibt sich im Wesentlichen (d.h. unter Berücksichtigung von erforderlichen a priori bekannte Toleranzzugaben) aus der Auswertung der Radarsignale in vertikaler Richtung, die Aufschluss über die reale Höhe des Fahrzeuges 3 gibt. In Analogie ergibt sich die Breite des Quaders aus der Auswertung der Radarsignale in horizontaler Richtung, die Aufschluss über die Breite des Fahrzeuges 3 gibt.

Die Länge des Quaders (ROI-Raum 55) wird in Abhängigkeit von der Länge des Fahrzeugs 3, die sich aus der Auswertung der Radarsignale in horizontaler und vertikaler Richtung unter eventueller Zuhilfenahme der Fahrzeugbreite und Fahrzeughöhe aus bekanntem a priori Wissen gewisser Fahrzeugklassen abgeleitet.

Sich annähernde Fahrzeuge 3 werden von der Videokameraeinheit 5 erfasst, aber erst dann erkannt, wenn die einzelnen Bilder von Bildverarbeitungsalgorithmen analysiert wurden. Dabei müssen die Algorithmen den gesamten erfassten Bildbereich durchsuchen. Da diese Algorithmen bekannterweise einen hohen Rechenaufwand benötigen, ist ein sehr leistungsfähiges und teures Datenverarbeitungssystem Voraussetzung. Solche Systeme haben zudem einen erhöhten Platzbedarf und eine große Wärmeentwicklung.

Durch Einsatz der neuen Tracking-Radarsensor-Einheit 1 in Kombination mit einer Videokameraeinheit 5 (gemäß Fig. 5 oder Fig. 6) besteht nun - wie in Fig. 7a schematisch dargestellt - die Möglichkeit, nur bestimmte Bereiche der Videobilder auszuwerten, um den Rechenaufwand zu reduzieren. Dabei können die Fahrzeuge 3 allein durch die Videokameraeinheit 5 aber nicht zuverlässig erkannt werden und die Fehlerquote der abgeleiteten Geschwindigkeit steigt deutlich an.

Mit einem 2D-Radar (gemäß dem Stand der Technik) wäre es zwar theoretisch schon möglich, dies durch eine dynamische Anpassung des Bildausschnittes zu verbessern, das würde aber nur eine geringfügige Verbesserung herbeiführen, da für eine zuverlässige und robuste Bildanalyse bei einem sich annähernden Fahrzeug der Bildausschnitt von Bild zu Bild sowohl in Größe, Form als auch in Lage verändert werden müsste. Hierzu ist aber die Auflösung eines Winkels in lediglich einer horizontalen Ebene nicht ausreichend.

Der Erfassungsbereich des Video-Radar-Verbundsystems 6 ist ein real vorliegender 3D-Raum. Mithilfe zweier orthogonaler 2D-Radare (zusammen 3D-Radar der Tracking-Radarsensor-Einheit 1) können Fahrzeuge 3 vollständig in ihren unterschiedlichen Positionen 33, 34, 35 aufgelöst werden und mit Hilfe des Trackingalgorithmus kann eine zuverlässige Prädiktion der Bewegungskurve des Fahrzeugs 3 erfolgen.

Auf Basis dieser Daten, die beim Radar-Tracking im Fernfeld (100 bis 50 m) ermittelt werden, kann bereits vor Eintritt in das Nahfeld (50 bis 10 m) zuverlässig eine Prädiktion für einen ROI-Raum 55 der Videokameraeinheit 5 in Form eines 3D-Raumes aufgespannt werden. Wird dieser 3D-Raum in Abhängigkeit des zeitlichen Verlaufes auf einzelne 2D-Bilder des Videostreams projiziert, ergeben sich für jedes einzelne Videobild ganz individuelle Ausschnitte (in Fig. 7a als Momentaufnahme "eine Scheibe" vom ROI-Raum 55 gezeichnet), die unter minimalem Aufwand robuste Ergebnisse liefern, wenn sie von Tracking-Bildverarbeitungs-Algorithmen analysiert werden. Der in Fig. 7a gezeichnete Teil des ROI-Raumes 55, der die Bilddaten für die aktuelle Position 35 des Fahrzeugs 3 eingrenzt, ist in seiner Veränderung durch die gestrichelten Positionen auch für die früher aufgenommenen Positionen 33 und 34 des Fahrzeugs 3 schematisch dargestellt. Diese Änderung ist auch in der darunter in Fig. 7b gezeigte Darstellung der getrackten Bildaufnahmen durch die hintereinander liegenden Bildausschnitte, die vereinfacht mit den zugehörigen ausgewählten Positionen 33, 34 und 35 des Fahrzeugs 3 bezeichnet sind, deutlich zu erkennen.

Somit kann nahezu die volle Leistungsfähigkeit der eingesetzten Datenverarbeitungssysteme auf die Bilddaten angesetzt werden, die möglichst in einem Bereich großer Disparität einer Stereo-Videokameraeinheit 5 liegen. Die dann zu verarbeitenden Daten führen zu einem sehr genauen Bildtracking-Ergebnis und damit auch zu sehr genauen Werten, insbesondere Geschwindigkeitswerten.

Von besonderer Bedeutung bei der Installation des Video-Radar-Verbundsystems 6 ist dabei, dass der berechnete ROI-Raum 55 im vollständigen Erfassungsbereich sowohl der Tracking-Radarsensor-Einheit 1 als auch der Stereo-Videokameraeinheit 5 liegt.

Durch die vorliegende Kombination der erfindungsgemäßen Tracking-Radarsensor-Einheit 1 auf Basis realer 3D-Aufnahme von Fahrzeugbewegungsdaten durch zusätzliche vertikale Winkelmessung mit dem an sich bekannten Videotracking mittels einer Stereo-Videokameraeinheit 5 ist eine deutliche Verbesserung der Genauigkeit und Zuverlässigkeit der Geschwindigkeitsmessung und der Zuordnung der im Video erfassten Fahrzeugdaten zu den vom Radar gemessenen Fahrzeugdaten erreicht sowie eine Reduzierung des für das Videotracking erforderlichen Rechenaufwandes zu verzeichnen.

### Bezugszeichen

- 1: Tracking-Radar-Einheit
- 11: (erster) Tracking-Radarsensor
- 111: Sendeantenne
- 112: Empfangsantenne
- 12, 13, 14: (weiterer) Tracking-Radarsensor
- 2: Radarkegel
- 21: erster Radarkegel
- 22: zweiter Radarkegel
- 23: (horizontaler) Überdeckungsbereich
- 24: (vertikaler) Überdeckungsbereich
- 25: Radarmesspunkt
- 3: Fahrzeug
- 31: LKW
- 311, 321: Frontansicht
- 32: PKW
- 33, 34; 35: Fahrzeugposition
- 4: Fahrbahn
- 5: Videokameraeinheit
- 51, 52: Videokamera
- 53: Basisachse (der Videokameras)
- 54: Kameragesichtsfeld (FOV)
- 55: ROI-Raum
- 6: Kamera-Radar-Verbundeinheit
- b: Basisbreite (der Stereokameraeinheit)
- d: Abstand (der Tracking-Radarsensoren)
- n: ganze Zahl
- ϕ: Winkel

## Patentansprüche

1. Verkehrsüberwachungssystem zur Geschwindigkeitsmessung und zuverlässigen Zuordnung von bewegten Fahrzeugen mit einem Mehrziel-Aufnahmemodul, enthaltend einen ersten Tracking-Radarsensor (11) mit einer Sendeantenne (111) und zwei räumlich separierten Empfangsantennen (112), die eine erste Antennenstruktur zur Erfassung von horizontalen Entfernungen, Ausdehnungen und azimutalen Winkelpositionen der bewegten Fahrzeuge (3) bilden und einen Sensorausgang mit einer regelmäßigen Folge von Messdaten, die mindestens eine zum Radarsensor (11) gerichtete radiale Geschwindigkeitskomponente aus Azimutwinkelpositionen und Entfernungen enthalten, aufweisen, **dadurch gekennzeichnet, dass**
- mindestens ein weiterer Tracking-Radarsensor (12; 13; 14), der eine zur Antennenstruktur der Sende- und Empfangsantennen (111; 112) des ersten Tracking-Radarsensors (11) gleichartige, aber auf einer davon verschiedenen Frequenz betriebenen Antennenstruktur aufweist, in unmittelbarer Nähe des ersten Tracking-Radarsensor (11) angeordnet ist,
- die Antennenstruktur des mindestens einen weiteren Tracking-Radarsensors (12; 13; 14) um einen definierten Winkel (ϕ) gegenüber der Antennenstruktur des ersten Tracking-Radarsensors (11) verdreht ist, sodass der weitere Tracking-Radarsensor (12) eine Antennenstruktur zur Erfassung wenigstens einer Signalkomponente für die Rekonstruktion von vertikalen Entfernungen, Ausdehnungen und Elevationswinkelpositionen der bewegten Fahrzeuge ausbildet und einen Sensorausgang mit einer regelmäßigen Folge von Messdaten, die mindestens eine zum Radarsensor (12) gerichtete radiale Geschwindigkeitskomponente aus Elevationswinkelpositionen enthalten, aufweist, und
- Mittel zum Fusionieren der von dem ersten und dem mindestens einen weiteren Tracking-Radarsensor (12; 13; 14) erzeugten Messdaten zu dreidimensionalen (3D-) Radarbilddaten vorhanden sind, wobei auf jedes der übereinstimmend aus den Messdaten des ersten und des mindestens einen weiteren Tracking-Radarsensors (12; 13; 14) erkannten Fahrzeuge (3) ein Trackingverfahren anhand einer Folge der fusionierten 3D-Radarbilddaten vorgesehen ist.

2. Verkehrsüberwachungssystem nach Anspruch 1, **dadurch gekennzeichnet, dass** die Antennenstrukturen des ersten Tracking-Radarsensors (11) und des mindestens einen weiteren Tracking-Radarsensor (12; 13; 14) um ganzzahlige Vielfache (n = 1...3) von 45° zueinander verdreht angeordnet sind, wodurch die mindestens eine erfasste Signalkomponente zur Rekonstruktion von vertikalen Entfernungen, Ausdehnungen und Elevationswinkelpositionen der bewegten Fahrzeuge einen Rekonstruktionsfehler einer vertikalen zu einer horizonalen Fahrzeugposition (33; 34; 35) von 1:1 aufweist.

3. Verkehrsüberwachungssystem nach Anspruch 1, **dadurch gekennzeichnet, dass** die Antennenstrukturen des ersten Tracking-Radarsensors (11) und des mindestens einen weiteren Tracking-Radarsensor (12; 13; 14) um ganzzahlige Vielfache (n = 1...5) von 30° zueinander verdreht angeordnet sind, wodurch die mindestens eine erfasste Signalkomponente zur Rekonstruktion von vertikalen Entfernungen, Ausdehnungen und Elevationswinkelpositionen der bewegten Fahrzeuge (3) einen Rekonstruktionsfehler einer vertikalen zu einer horizonalen Fahrzeugposition (33; 34; 35) von 1,55:1 aufweist.

4. Verkehrsüberwachungssystem nach Anspruch 1, 2 oder 3, **dadurch gekennzeichnet, dass** die Antennenstrukturen des ersten Tracking-Radarsensors (11) und des einen weiteren Tracking-Radarsensor (12) um 90° zueinander verdreht angeordnet sind, wodurch die erfasste Signalkomponente direkt zur Messung von vertikalen Entfernungen, Ausdehnungen und Elevationswinkelpositionen der bewegten Fahrzeuge (3) anwendbar ist.

5. Verkehrsüberwachungssystem nach einem der Ansprüche 1 bis 4, **dadurch gekennzeichnet, dass** der erste Tracking-Radarsensor (11) und der mindestens eine weitere Tracking-Radarsensor (12; 13; 14) mit einer Videokamera (51; 52) kombiniert sind, wobei Mittel zur Fusion der horizontalen und vertikalen Messdaten der Tracking-Radarsensoren (11; 12; 13; 14) der Tracking-Radar-Einheit (1) mit Videodaten der Videokameraeinheit (5) vorgesehen sind.

6. Verkehrsüberwachungssystem nach einem der Ansprüche 1 bis 4, **dadurch gekennzeichnet, dass** der erste Tracking-Radarsensor (11) und der mindestens eine weitere Tracking-Radarsensor (12; 13; 14) mit einer Stereo-Videokameraeinheit (5) aus zwei Videokameras (51; 52) mit einem Basisabstand (b) kombiniert sind, wobei Mittel zur Fusion der horizontalen und vertikalen Messdaten der Tracking-Radarsensoren (11; 12; 13; 14) der Tracking-Radar-Einheit (1) mit Videodaten der Videokameras (51; 52) vorgesehen sind.

7. Verkehrsüberwachungssystem nach einem der Ansprüche 5 oder 6, **dadurch gekennzeichnet, dass** jedem der übereinstimmend aus den Messdaten des ersten und des mindestens einen weiteren Tracking-Radarsensors (12; 13; 14) erkannten Fahrzeuge (3) ein ROI-Fenster (55) zur Ermittlung von Fahrzeugmerkmalen und zum Tracking innerhalb eines Videobildes zugeordnet ist.

8. Verkehrsüberwachungssystem nach Anspruch 6, **dadurch gekennzeichnet, dass** der Basisabstand (b) der zwei Videokameras horizontal angeordnet ist.

9. Verkehrsüberwachungssystem nach Anspruch 6, **dadurch gekennzeichnet, dass** der Basisabstand (b) der zwei Videokameras (51; 52) vertikal angeordnet ist.

10. Verkehrsüberwachungssystem nach Anspruch 6, **dadurch gekennzeichnet, dass** der erste Tracking-Radarsensor (11) und der mindestens eine weitere Tracking-Radarsensor (12; 13; 14) innerhalb des Basisabstandes (b) der zwei Videokameras (51; 52) angeordnet sind, wobei die Tracking-Radarsensoren (11; 12; 13; 14) entlang einer Basisachse (53) des Basisabstandes (b) zwischen den zwei Videokameras (51; 52) angeordnet sind.

11. Verkehrsüberwachungssystem nach Anspruch 6, **dadurch gekennzeichnet, dass** der erste Tracking-Radarsensor (11) und der mindestens eine weitere Tracking-Radarsensor (12; 13; 14) innerhalb des Basisabstandes (b) der zwei Videokameras (51; 52) angeordnet sind, wobei die Tracking-Radarsensoren (11; 12; 13; 14) orthogonal zu einer Basisachse (53) des Basisabstandes (b) zwischen den zwei Videokameras (51; 52) angeordnet sind.

12. Verkehrsüberwachungssystem nach Anspruch 6, **dadurch gekennzeichnet, dass** der erste und der mindestens eine weitere Tracking-Radarsensor außerhalb des Basisabstandes (b) der zwei Videokameras (51; 52) angeordnet sind.

13. Verkehrsüberwachungssystem nach Anspruch 12, **dadurch gekennzeichnet, dass** der erste Tracking-Radarsensor (11) und der mindestens eine weitere Tracking-Radarsensor (12; 13; 14) räumlich getrennt von der Stereo-Videokameraeinheit (5) angeordnet sind, wobei nach deren räumlich getrennten Aufstellung eine Kalibrierung zur Ermittlung einer Transformationsvorschrift vorgesehen ist.
